(19) Europäisches Patentamt
European Patent Office
Office européen des brevets

(11) **EP 4 545 905 B1**

(12) **EUROPEAN PATENT SPECIFICATION**

(45) Date of publication and mention
of the grant of the patent:
**11.02.2026 Bulletin 2026/07**

(21) Application number: **24184597.3**

(22) Date of filing: **26.06.2024**

(51) International Patent Classification (IPC):
*G01B 11/25* (2006.01)   *G06T 7/521* (2017.01)
*G06V 20/64* (2022.01)   *G02B 27/42* (2006.01)
*H04N 13/254* (2018.01)   *G06N 3/02* (2006.01)
*G06N 3/08* (2023.01)   *G06V 10/764* (2022.01)
*G06V 10/145* (2022.01)   *G06V 10/82* (2022.01)

(52) Cooperative Patent Classification (CPC):
**G01B 11/254; G01B 11/2513; G02B 27/4205;
G06N 3/02; G06N 3/08; G06N 3/084; G06T 7/521;
G06V 10/145; G06V 10/764; G06V 10/82;
G06V 20/64; H04N 13/254**

(54) **ALL-OPTICAL INTELLIGENT COMPUTING THREE-DIMENSIONAL PERCEPTION SYSTEM AND DEVICE**

REIN OPTISCHES DREIDIMENSIONALES WAHRNEHMUNGSSYSTEM FÜR INTELLIGENTE DATENVERARBEITUNG UND VORRICHTUNG

SYSTÈME ET DISPOSITIF DE PERCEPTION TRIDIMENSIONNELLE INFORMATIQUE INTELLIGENTE ENTIÈREMENT OPTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.10.2023 CN 202311411802**

(43) Date of publication of application:
**30.04.2025 Bulletin 2025/18**

(73) Proprietor: **Tsinghua University
Beijing 100084 (CN)**

(72) Inventors:
• **Dai, Qionghai
Beijing, 100084 (CN)**
• **Fang, Lu
Beijing, 100084 (CN)**
• **Yan, Tao
Beijing, 100084 (CN)**
• **Zhou, Tiankuang
Beijing, 100084 (CN)**

(74) Representative: **Petraz, Gilberto Luigi et al
GLP S.r.l.
Viale Europa Unita, 171
33100 Udine (IT)**

(56) References cited:
**US-A1- 2018 255 289   US-A1- 2022 366 253**

**Description**

TECHNICAL FIELD

The present disclosure relates to the fields of optical computing, depth detection and three-dimensional perception technologies, in particular to an all-optical intelligent computing three-dimensional perception system and an all-optical intelligent computing three-dimensional perception device.

BACKGROUND

Three-dimensional perception provides a brilliant representation and understanding of depth information in the physical world, and achieves unprecedented innovations in various fields, such as building industry, virtual reality, and automatic driving. Humans have been pursuing a simple and effective three-dimensional perception technique to better perceive the world.

US 2022/366253 A1 describes imaging systems and imaging methods for estimating a three-dimensional position of an object at a scene and/or generating a three-dimensional image of the scene.

**SUMMARY**

The present disclosure is intended to address one of the technical problems in the related art at least to some extent.

In view of this, a first objective of the present disclosure is to provide an all-optical intelligent computing three-dimensional perception system, to solve real-world depth detection problems using an optical computational method, realize a high-speed, low-power, scalable three-dimensional perception system, and solve depth detection tasks based on all-optical diffractive surface.

A second objective of the present disclosure is to provide an optical superpixel modeling and training method for a three-dimensional perception for an arbitrarily shaped object.

A third objective of the present disclosure is to provide a superpixel classification modeling and training method for robust three-dimensional perception for an arbitrarily shaped object under different illuminations and reflectivity conditions.

A fourth objective of the present disclosure is to provide an optical global modeling and training method for an object with priori shape information.

A fifth objective of the present disclosure is to provide an all-optical intelligent computing three-dimensional perception device.

In order to achieve the above objectives, a first aspect of the present disclosure provides an all-optical intelligent computing three-dimensional perception system. The system includes: a reference light inputting module, an all-optical structured light encoding module, a structured light illuminating module, an all-optical reflected light decoding module and a three-dimensional information acquisition module.

The reference light inputting module includes a solid state laser with a working wavelength, and the solid state laser is configured to generate a laser beam.

The all-optical structured light encoding module includes an encoding diffractive surface consists of a phase modulator based on encoding phase modulation information, and the encoding diffractive surface is configured to modulate a wave-front phase based on the laser beam to generate a structured light with spatial pattern varying with depth.

The structured light illuminating module includes a plurality of optical elements, and the optical elements are configured to irradiate the generated structured light onto a surface of an object.

The all-optical reflected light decoding module includes a decoding diffractive surface consists of a phase modulator based on decoding phase modulation information, and the decoding diffractive surface is configured to map depth information in the structured light reflected by the object to a light intensity of an output plane.

The three-dimensional information acquisition module is configured to obtain light intensity information on the output plane by using a photodetector for depth information acquisition to achieve a three-dimensional perception.

The all-optical intelligent computing three-dimensional perception system of the embodiments of the present disclosure has the following addition technical features.

In an embodiment of the present disclosure, the phase modulator includes a spatial light modulator (SLM), the phase modulator is configured to determine an amplitude modulation coefficient and a phase modulation coefficient of each pixel for the structured light, and each pixel is an optical neuron.

In an embodiment of the present disclosure, the encoding diffractive surface or decoding diffractive surface forms a neural network with a specific function through free space propagation.

In order to achieve the above objectives, a second aspect of the present disclosure provides an optical superpixel modeling and training method for a three-dimensional perception for an arbitrarily shaped object. The method includes:

constructing first training data based on a preset first superpixel optimized region;
training first neuron data in an encoding diffractive surface and a decoding diffractive surface of a superpixel using the first training data, to determine first target depth information according to depth information in a spatial pattern of a structured light of an encoding superpixel and a reflected optical pattern of the structured light of a decoding superpixel; and
mapping the first target depth information to a light intensity of a region of interest (ROI) of an output plane by an intelligently optimized optical connection.

In an embodiment of the present disclosure, the method further includes:

optimizing the encoding superpixel and the decoding superpixel, such that propagation of the structured light is constrained within a superpixel region to obtain a structured light constraint result; and
replicating and splicing an optimized encoding superpixel and decoding superpixel based on the structured light constraint result to obtain a corresponding encoding diffractive surface and a decoding intelligent diffractive surface.

In an embodiment of the present disclosure, the first training data includes a training set, a test set, and a loss function, and the first neuron data includes an amplitude modulation coefficient and a phase modulation coefficient of neuron.

In order to achieve the above objectives, a third aspect of the present disclosure provides a superpixel classification modeling and training method for a robust three-dimensional perception for an arbitrarily shaped object under different illumination and reflectivity conditions. The method includes:

constructing second training data based on a preset second superpixel optimized region;
training second neuron data in an encoding diffractive surface and a decoding diffractive surface of a superpixel using the second training data, to determine second target depth information according to depth information in a spatial pattern of a structured light of an encoding superpixel and a reflected optical pattern of the structured light of a decoding superpixel; and
classifying the second target depth information into a first preset number of depth intervals, and mapping the first preset number of depth intervals to a second preset number of preset regions on an output plane, to determine a region where a maximum light intensity is located as a classification result.

In an embodiment of the present disclosure, the second training data comprises a training set, a test set, and a loss function, and the second neuron data comprises an amplitude modulation coefficient and a phase modulation coefficient of neuron.

In order to achieve the above objectives, a fourth aspect of the present disclosure provides an optical global modeling and training method for an object with priori shape information. The method includes:

constructing third training data based on an optimized region with a global size;
training third neuron data in an encoding diffractive surface and a decoding diffractive surface of a superpixel using the third training data, to form the encoding diffractive surface and the decoding diffractive surface according to depth information in a spatial pattern of a structured light of an encoding superpixel and a reflected optical pattern of the structured light of a decoding superpixel; and
retrieving a region depth according to a preset demand based on a light intensity of an output region of the encoding diffractive surface and the decoding diffractive surface.

In an embodiment of the present disclosure, the third training data comprises a training set, a test set, and a loss function, and the third neuron data comprises an amplitude modulation coefficient and a phase modulation coefficient of neuron.

With the all-optical intelligent computational three-dimensional perception system, the above methods, and the all-optical intelligent computational three-dimensional perception device provided by the embodiments of the present disclosure, light-speed and post processing-free three-dimensional perception can be achieved through diffractive surfaces. The present disclosure works by encoding the depth information into the spatial pattern of the custom structured light and decoding it into the output light intensity through diffractive surface-optimized optical interconnections. Unlike the use of reconstruction algorithms, three-dimensional maps are immediately recorded using two-dimensional sensors, and the captured light intensity directly indicates the depth information. The present disclosure provides a new idea of three-dimensional perception, which greatly simplifies the three-dimensional perception process and supports the next generation of high-speed, low-power three-dimensional perception technologies.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

The foregoing and/or additional aspects and advantages of the present disclosure will become apparent and readily understood from the following description of the embodiments in combination with the accompanying drawings.

FIG. 1 is a block diagram of an all-optical intelligent computing three-dimensional perception system according to an embodiment of the present disclosure.

FIG. 2 is a diagram of an optical structure of the all-optical intelligent computing three-dimensional perception system according to an embodiment of the present disclosure.

FIG. 3 is a flowchart of a method applied to the all-optical intelligent computing three-dimensional perception system according to an embodiment of the present disclosure.

FIG. 4 is a flowchart of another method applied to the all-optical intelligent computing three-dimensional perception system according to an embodiment of the present disclosure.

FIG. 5 is a flowchart of another method applied to the all-optical intelligent computing three-dimensional perception system according to an embodiment of the present disclosure.

FIG. 6 is a schematic diagram of a depth detection result for objects with priori shape information according to an embodiment of the present disclosure.

FIG. 7 illustrates diagrams of an encoding intelligent diffractive surface and a decoding intelligent diffractive surface obtained by replicating superpixels according to an optical superpixel depth detection output result of an embodiment of the present disclosure, a comparison diagram of depth estimation results of a single-group of superpixels and multi-group of superpixels, and a comparison diagram of a superpixel depth estimation result and an electronic network depth estimation result.

FIG. 8 is a diagram of a superpixel classification detection output result for achieving robust three-dimensional perception for arbitrarily shaped objects under different illumination and reflectivity conditions according to an embodiment of the present disclosure.

FIG. 9 illustrates a diagram of a system and a diagram of an experimental system when using a SLM as an intelligent diffractive surface according to an embodiment of the present disclosure.

FIG. 10 illustrates a diagram of a system and a diagram of an experimental system when using a phase plate as an intelligent diffractive surface according to an embodiment of the present disclosure.

FIG. 11 is a comparison graph of a result of performing all-optical obstacle avoidance in a realistic scenario and results of other sensors according to an embodiment of the present disclosure.

FIG. 12 is a schematic diagram of an all-optical intelligent computing three-dimensional perception device according to an embodiment of the present disclosure.

## DETAILED DESCRIPTION

It is noted that the embodiments of the present disclosure and the features in the embodiments may be combined with each other without conflict. The present disclosure is described in detail below in the embodiments with reference to the accompanying drawings.

In order to enable those skilled in the art to better understand the scheme of the present disclosure, the technical solutions in the embodiments of the present disclosure will be clearly and completely described below in combination with the accompanying drawings in the embodiments of the present disclosure. Obviously, the described embodiments are only a part of the embodiments of the present disclosure, and not all of the embodiments of the present disclosure. Based on the embodiments in the present disclosure, all other embodiments obtained by those skilled in the art without inventive works shall fall within the scope of protection of the present disclosure.

Three-dimensional perception provides a brilliant representation and understanding of depth information in the physical world, and achieves unprecedented innovations in various fields, such as building industry, virtual reality, and automatic driving. Humans have been pursuing a simple and effective three-dimensional perception technique to better perceive the world. However, the existing three-dimensional perception methods face huge challenges in acquiring three-dimensional images directly using an optical system, the depth information inherently contained in the propagation of light field is lost when captured by conventional two-dimensional cameras. Stereo vision methods, for example, use feature matching, computational stereo and deep learning algorithms to estimate differences between multi-view two-dimensional images to obtain a three-dimensional image. However, complex post-processing imposes a heavy computational burden on the electronic hardware, which limits the speed and applicability of three-dimensional perception, especially in the case of increasing model complexity in the artificial neural network (ANN) basic method. Compared with completely relying on the post-processing, directly interfering with the optical process of the three-dimensional perception can reduce the computational burden of electronic hardware. For example, a light detection and ranging (LiDAR) solution mainly uses time of flight (ToF) or frequency modulated continuous wave (FMCW) to realize three-dimensional perception without complex reconstruction algorithms. However, this solution needs to realize precise scanning and accurate time or frequency measurement, which leads to the bottleneck of parallel detections. Nowadays, no three-dimensional perception technique can be as widely used as the two-dimensional imaging sensor. With the deepening of the exploration of the physical essence of three-dimensional perception, in the present disclosure, it is desirable to directly obtain a depth image through an optical imaging device, that is, to obtain the depth information in an optical manner without post-processing. Benefiting from the advantages of energy efficiency and speed, a field of optical computing technology triggers a research boom in recent years. For example, a diffractive surface can transmit light from an input field of view (FoV) to an output FoV with a specific modulation. By modulating light propagation and utilizing its physical properties, the diffractive surface has realized all optical linear transformation, image classification, pulse shaping, and wave sensing and logical operation. Using optical computing to promote three-dimensional perception will provide unprecedented possibilities for high-speed and low-power application scenarios, including ultra-fast obstacle avoidance in automatic driving, low-power unmanned system, energy-saving smart factory, and the like.

The all-optical intelligent computing three-dimensional perception system, method and device are described below with reference to the accompanying drawings.

It can be understood that the demand for automatic vehicles has driven huge advances in three-dimensional perception technology. However, existing technologies, such as stereo vision cameras and LiDAR, require complex post-processing or point-by-point scanning, so that the computational burden of the hardware is heavy and the operating speed is slow. The present disclosure provides the all-optical intelligent computing three-dimensional perception system, to realize three-dimensional perception at a speed of light without post-processing. The present disclosure encodes depth information into an optical pattern of custom structured light and decodes it into an output light intensity through an optical interconnection optimized by a diffractive surface. Three-dimensional perception without post-processing is accomplished during a light propagation process on a passive surface, and a captured light intensity directly reflects a depth image.

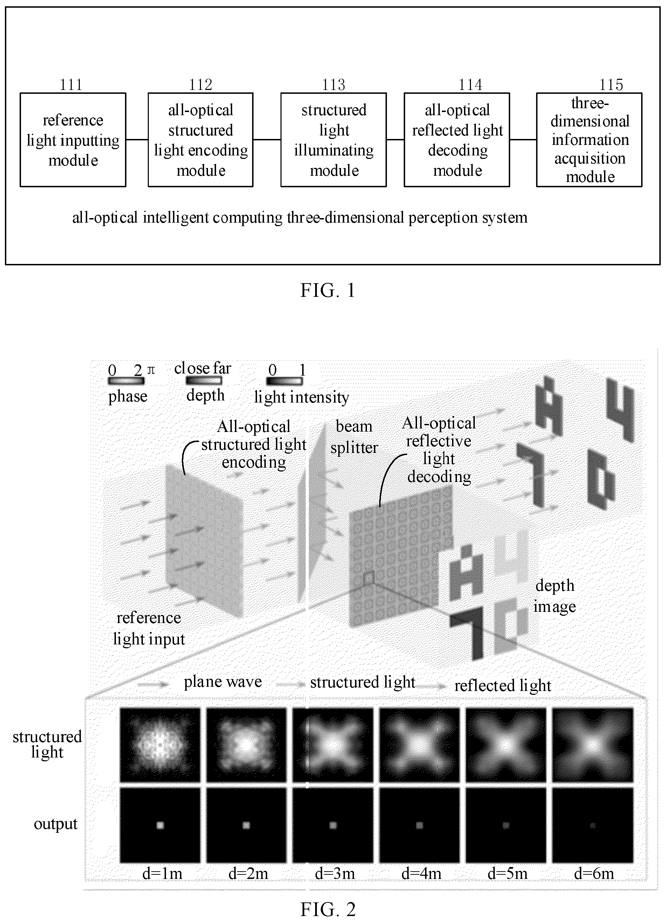

FIG. 1 is a diagram of an all-optical intelligent computing three-dimensional perception system according to an embodiment of the present disclosure.

As illustrated in FIG. 1, the system includes a reference light inputting module 111, an all-optical structured light encoding module 112, a structured light illuminating module 113, an all-optical reflected light decoding module 114 and a three-dimensional information acquisition module 115.

The reference light inputting module 111 includes a solid state laser with a working wavelength, and the solid state laser is configured to generate a laser beam.

The all-optical structured light encoding module 112 includes an encoding diffractive surface consisting of a phase modulator based on encoding phase modulation information, and the encoding diffractive surface is configured to modulate a wave-front phase based on the laser beam to generate a structured light with a spatial pattern varying with depth.

The structured light illuminating module 113 includes a plurality of optical elements, and the optical elements are configured to irradiate the generated structured light onto a surface of an object.

The all-optical reflected light decoding module 114 includes a decoding diffractive surface consisting of a phase modulator based on decoding phase modulation information, and the decoding diffractive surface is configured to map depth information in the structured light reflected by the object to a light intensity on an output plane.

The three-dimensional information acquisition module 115 is configured to obtain light intensity information on the output plane by using a photodetector for depth information acquisition to achieve three-dimensional perception.

In detail, the reference light inputting module 111 generates the laser beam by the solid state laser with the working wavelength to provide a system working light source. The all-optical structured light encoding module 112 is accomplished by modulating the wavefront phase using the encoding diffractive surface consisting of the phase modulator with the encoding phase modulation information, to generate the structured light with the spatial pattern varying with depth. The structured light illuminating module 113 is accomplished by beam splitters and other optical elements to irradiate the generated structured light onto the surface of the object. The all-optical reflected light decoding module 114 is accomplished by the decoding diffractive surface consisting of the phase modulator with the decoding phase modulation information, to map the depth information in the structured light reflected by the object to the light intensity of the output plane. The light intensity of the output plane directly reflects a depth image, and the three-dimensional information acquisition module 115 obtains the light intensity information on the output plane captured by the photodetector, to realize the depth information acquisition and complete three-dimensional perception.

It is understood that the intelligent diffractive surface of the present disclosure consists of a phase modulator. The phase modulator may be realized by using a SLM or a phase plate made of a specific material. The phase modulator can determine the amplitude modulation coefficient and the phase modulation coefficient of each pixel for the light, and each pixel is an optical neuron. The intelligent diffractive surfaces form a neural network with a specific function through free space propagation, to realize tasks such as intelligent computation and feature learning.

FIG. 2 is a diagram of an optical structure of the all-optical intelligent computing three-dimensional perception system. The reference light inputting module generates the laser beam by the solid state laser with the working wavelength to provide the system working light source. The all-optical structured light encoding module is accomplished by modulating the wave-front phase using the encoding diffractive surface consists of the phase modulator with the encoding phase modulation information, to generate the structured light with the spatial pattern varying with depth. The structured light illuminating module is accomplished by the beam splitters and other optical elements to irradiate the generated structured light onto the surface of the object. The all-optical reflected light decoding module is accomplished by the decoding diffractive surface consists of the phase modulator with the decoding phase modulation information, to map the depth information in the structured light reflected by the object to the light intensity of the output plane. The light intensity of the output plane directly reflects the depth image, and the three-dimensional information acquisition module obtains the light intensity information on the output plane captured by the photodetector, to realize the depth information acquisition and complete the three-dimensional perception.

The all-optical intelligent computing three-dimensional perception system enables light-speed and post-processing-free three-dimensional perception via diffractive surfaces. The present disclosure works by encoding depth information into the spatial pattern of custom structured light and decoding it into an output light intensity through optical interconnections optimized by the diffractive surfaces. Unlike a use of reconstruction algorithms, a three-dimensional map are immediately recorded using 2D sensors and a captured light intensity directly represents the depth information.

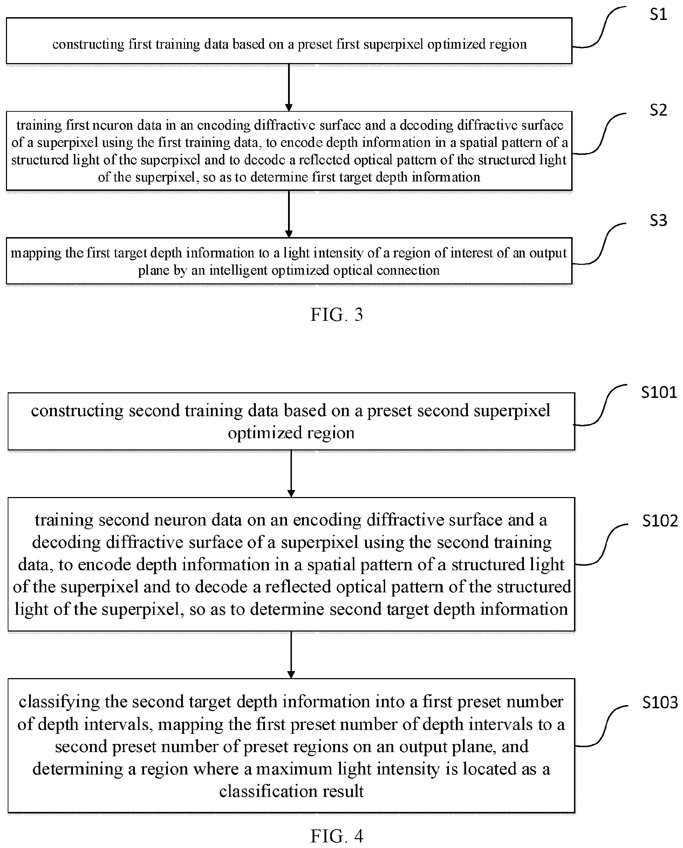

FIG. 3 is a flowchart of an optical superpixel modeling and training method for three-dimensional perception of arbitrarily shaped objects according to an embodiment of the present disclosure. The method includes the following steps.

At step S1, first training data is constructed based on a preset first superpixel optimized region.

At step S2, first neuron data in an encoding diffractive surface and a decoding diffractive surface of a superpixel is trained using the first training data, to determine first target depth information according to depth information in a spatial pattern of a structured light of an encoding superpixel and a reflected optical pattern of the structured light of a decoding superpixel.

At S3, the first target depth information is mapped to a light intensity of a ROI of an output plane by an intelligently optimized optical connection.

In detail, in the method of the embodiment of the present disclosure, a square region with a suitable size is selected as a superpixel optimized region on which a suitable training set, a test set and a suitable loss function are established. The amplitude and phase modulation coefficients of each neuron in the superpixel intelligent diffractive surface are trained in combination with an error back propagation and a stochastic gradient descent algorithm, to realize that an encoding superpixel generates a customized structured light and a decoding superpixel learns the depth information in the spatial pattern. The depth information is linearly mapped to the light intensity of the ROI of the output plane through the intelligently optimized optical connection. Preferably, the training requires that the structured light of the encoding superpixel is confined within a superpixel region and an output of the decoding superpixel is also confined within a superpixel region to prevent crosstalk between neighboring superpixels. After a single encoding superpixel and a single decoding superpixel are optimized, they are replicated at any integer multiple and spliced together to form an encoding intelligent diffractive surface and a decoding intelligent diffractive surface.

In an embodiment of the present disclosure, the first training data includes the training set, the test set, and the loss function, and the first neuron data includes the amplitude modulation coefficient and includes phase modulation coefficient of neuron.

FIG. 4 is a flowchart of a superpixel classification modeling and training method for robust three-dimensional perception of arbitrarily shaped objects under different illumination and reflectivity conditions according to an embodiment of the present disclosure. The method includes the following steps.

At step S101, second training data is constructed based on a preset second superpixel optimized region.

At step S102, second neuron data in an encoding diffractive surface and a decoding diffractive surface of a superpixel is trained using the second training data, to determine second target depth information according to depth information in a spatial pattern of a structured light of an encoding superpixel and a reflected optical pattern of the structured light of a decoding superpixel.

At step S103, the second target depth information is classified into a first preset number of depth intervals, and the first preset number of depth intervals are mapped to a second preset number of preset regions on an output plane, to determining a region where a maximum light intensity is located as a classification result.

In detail, in the embodiment of the present disclosure, a square region with a suitable size is selected as a superpixel optimized region on which a suitable training set, a test set and a suitable loss function are established. Amplitude and phase modulation coefficients of each neuron in a superpixel intelligent diffractive surface are trained in combination with an error back propagation and a stochastic gradient descent algorithm, to realize that an encoding superpixel generates a customized structured light and a decoding superpixel learns the depth information in the spatial pattern. Target depth information is divided into a specific number of depth intervals. The trained superpixel maps the depth intervals to a specific number of predefined regions on the output plane. The region where the maximum light intensity is located is determined as the classification result and represents quantization depth. After a single encoding superpixel and a decoding superpixel are optimized, they are replicated at any integer multiple and spliced together to form the encoding intelligent diffractive surface and the decoding intelligent diffractive surface.

In an embodiment of the present disclosure, the second training data includes the training set, the test set, and the loss function, and the second neuron data includes the amplitude modulation coefficient and includes phase modulation coefficient of neuron.

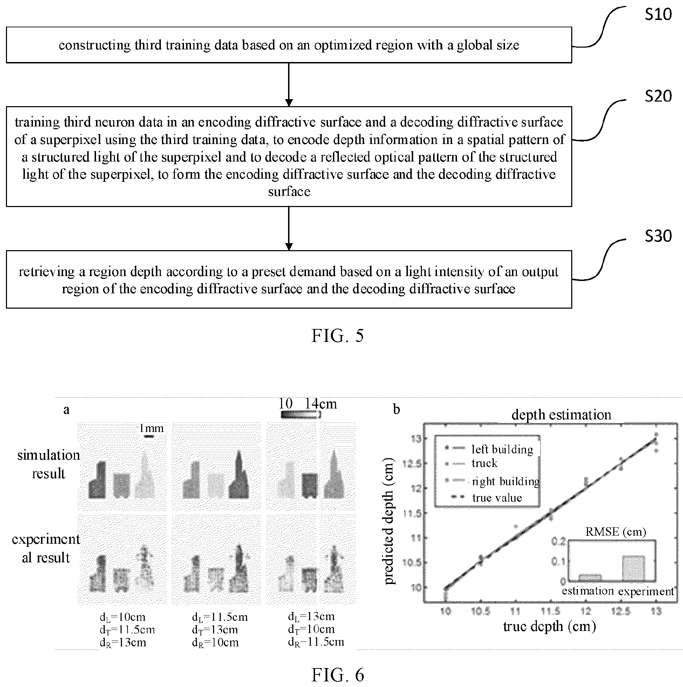

FIG. 5 is a flowchart of an optical global modeling and training method for objects with priori shape information according to an embodiment of the present disclosure. The method includes the following steps.

At step S10, third training data is constructed based on an optimized region with a global size.

At step S20, third neuron data in an encoding diffractive surface and a decoding diffractive surface of a superpixel is trained using the third training data, to form the encoding diffractive surface and the decoding diffractive surface according to depth information in a spatial pattern of a structured light of an encoding superpixel and a reflected optical pattern of the structured light of a decoding superpixel.

At step S30, a region depth is retrieved according to a preset demand based on a light intensity of output regions of the encoding diffractive surface and the decoding diffractive surface.

In detail, in the embodiment of the present disclosure, a region with a global size is selected as an optimized region on which a suitable training set having priori shape information, a test set and a suitable loss function are established. Amplitude and phase modulation coefficients of each neuron in an intelligent diffractive surface are trained in combination with an error back propagation and a stochastic gradient descent algorithm, to realize that an encoding superpixel generates a customized structured light and a decoding superpixel learns the depth information in the spatial pattern, so as to generate the encoding intelligent diffractive surface and the decoding intelligent diffractive surface. The region depth can be retrieved according to a demand by a light intensity of an output region or a location of the maximum light intensity of the output region.

In an embodiment of the present disclosure, the third training data includes the training set, the test set, and the loss function, and the third neuron data includes the amplitude modulation coefficient and includes phase modulation coefficient of neuron.

It is understood that the intelligent diffractive surface consists of a phase modulator. The phase modulator may be realized by using a SLM or a phase plate made of a specific material. The phase modulator can determine the amplitude modulation coefficient and the phase modulation coefficient of each pixel for a light, and each pixel is an optical neuron. The intelligent diffractive surfaces form a neural network with a specific function through free space propagation, to realize tasks such as intelligent computation and feature learning.

FIG. 6 illustrates simulation and experimental outputs and a depth detection result for objects with priori shape information realized according to FIGS. 1 and 2.

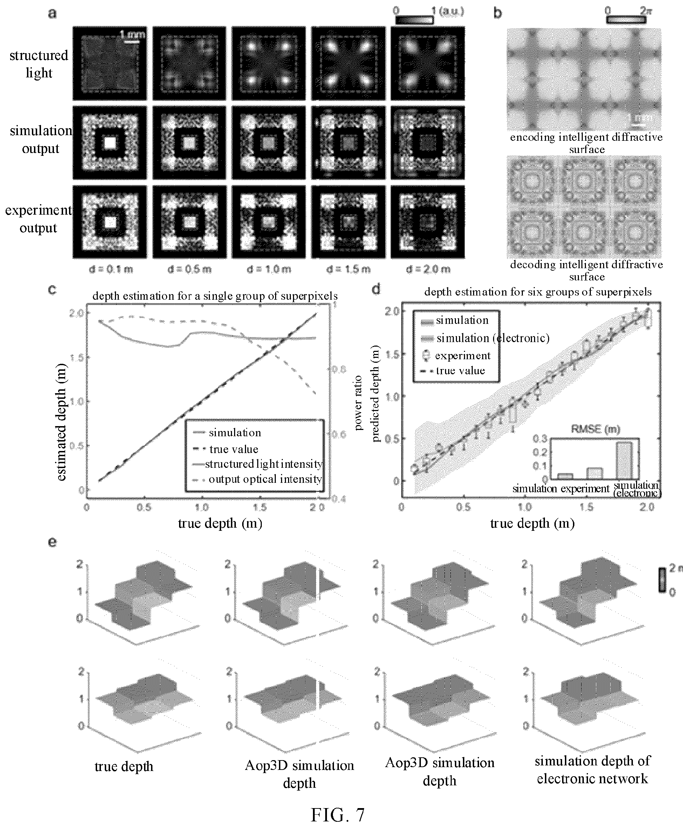

FIG. 7 illustrates output results of optical superpixel depth detections of three-dimensional perception for arbitrarily shaped objects realized according to FIGS. 1 and 2, diagrams of encoding intelligent diffractive surfaces and decoding intelligent diffractive surfaces obtained by replicating superpixel, and depth estimation results for single-group and multi-group superpixels and a comparison diagram of a superpixel depth estimation result and an electronic network depth estimation result. In FIG. 7, diagram a represents the output results of a single-group of superpixels at different depths. Light propagation is confined to a metapixel region, therefore ensuring limited crosstalk after replication. When facing a general object (taking six steps as an example), all-in-one perception three-dimensional (Aop3D) can directly perform a depth detection by modulating light propagation. When an electronic network faces a same task, different diffractive images are generated for different combinations of depths, which results in an exponential growth of size of the training set as the increase of the number of steps, therefore causing the electronic network to be severely interfered. In FIG. 7, diagrams d and e demonstrate the advantages of an optical superpixel depth detection over the electronic network in detecting arbitrary objects (taking six steps as an example).

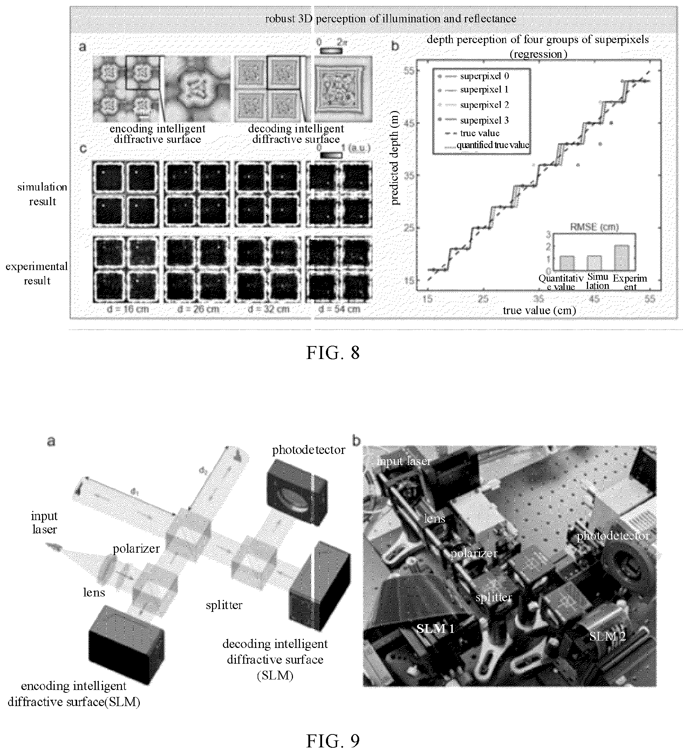

FIG. 8 shows the superpixel classification detection output results for robust three-dimensional perception for arbitrarily shaped objects under different illumination and reflectivity conditions realized according to FIGS. 1 and 2, which demonstrates the robustness of the system.

FIG. 9 shows a diagram of a system and a diagram of an experimental system when using a SLM as an intelligent diffractive surface realized according to FIGS. 1, 2 and 6. The laser beam is generated using a solid state laser (MRL-FN-698, CNI) with a working wavelength of 698 nm. It is coupled to a single-mode fiber (P5-630A-PCAPC-1, Thorlabs), collimated via a lens (AC254-100-A, Thorlabs) and polarized by a linear polarizer (LPNIR100, Thorlabs), to achieve the reference light inputting module 111. The first SLM (P1920-400-800 Meadowlark) modulates the wave-front phase and generates the structured light according to an optimized coding mask, and provides the depth information encoded into the spatial pattern of the customized structured light, to realize the all-optical structured light encoding module 112. The structured light is split by a beam splitter (CCM1-BS013, Thorlabs) to illuminate two objects, and a reflected light from an object to be measured is provided to a decoding diffraction computing unit, to achieve the structured light illuminating module 113. The reflected light from the objects is perceived by a second SLM (HSP1920-600-1300-HSP8, Meadowlark) to decode the depth information and map it into the light intensity after a distance of 12 cm, to achieve the all-optical reflected light decoding module 114. After diffraction propagation for 12 cm, depth images are captured by using a scientific complementary metal oxide semiconductor (sCMOS) sensor (Andor Zyla 4.2), which accomplishes a depth detection.

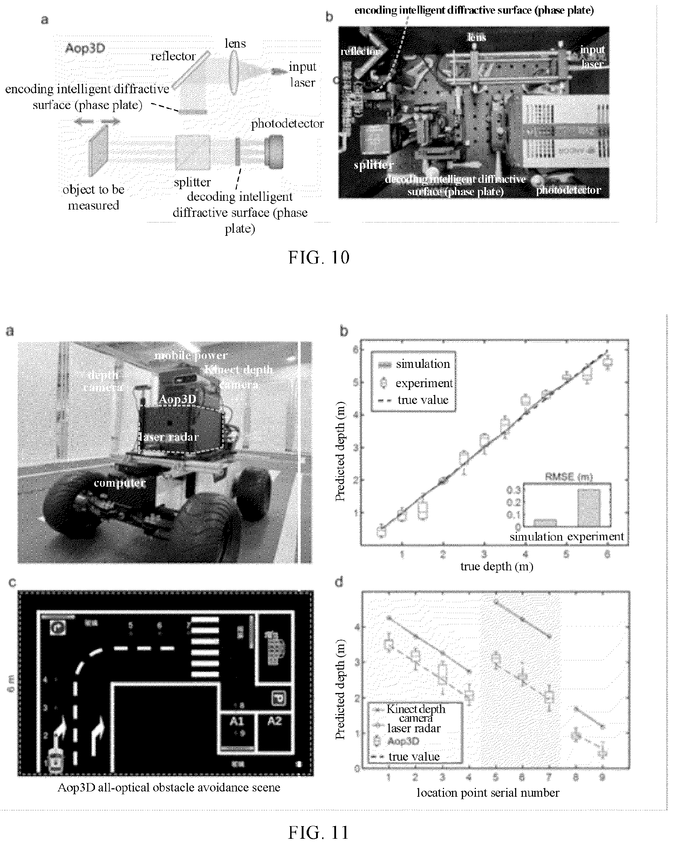

FIG. 10 shows a diagram of a system and a diagram of an experimental system when using a phase plate as an intelligent diffractive surface realized according to FIGS. 1, 2 and 7.

FIG. 11 shows a comparison graph of a result of performing all-optical obstacle avoidance in a realistic scenario and results of other sensors (including a Kinect depth camera and a LiDAR). In FIG. 11, diagram d shows that a car successfully detects all pieces of glass and obtains correct distances using Aop3D. However, the Kinect depth camera and LiDAR are unable to detect the pieces of glass and incorrectly return distances to walls, which are always greater than distances to the pieces of glass, results in collision risks.

To ensure that the light intensity of an output optical field $O$ is linearly correlated with depth, the phase modulation parameters of the encoding and decoding surfaces of the present disclosure are optimized. In the present disclosure, for the solution of the three-dimensional perception for objects with priori shape information, a mean square error (MSE) between $|O|^2$ and a true depth image $O^{gt}$ is used as the loss function:

$$Loss_1(\boldsymbol{O}, \boldsymbol{O}^{gt}) = \frac{1}{N^2} \sum_{i,j} (\boldsymbol{O}_{i,j}^{gt} - a|\boldsymbol{O}_{i,j}|^2)^2 \qquad (1)$$

where, $a$ is a trainable parameter and is used to adjust a magnification of a light intensity, $i$ and $j$ are image pixel indexes, and $N$ is a number of pixels in a row or column of an image.

In FIG. 7, a solution for performing the three-dimensional perception for arbitrarily shaped objects using a superpixel is provided. A system goal is to optimize a superpixel to achieve a linear relationship between an average light intensity of an output RoI and the depth. For depth $d$ in a range of $[d_{\min}, d_{\max}]$, a true output $O^{gt}$ is designed as:

$$\boldsymbol{O}_{i,j}^{gt} = \begin{cases} \dfrac{d_{\max} - d}{d_{\max} - d_{\min}}, & (i,j) \in \text{RoI} \\ 0, & \text{Others} \end{cases} \qquad (2)$$

In FIG. 8, a superpixel classification solution for a robust three-dimensional perception for arbitrarily shaped objects under different illumination and reflectivity conditions is provided, where the location of light aggregation represents the depth information:

$$\boldsymbol{O}_{i,j}^{gt} = \begin{cases} 1, & (i,j) \in \text{Predefined Classification Region} \\ 0, & \text{Others} \end{cases} \qquad (3)$$

The present disclosure highlights a central region of the output field $O$ for depth estimation. A width and height of the central region is half of that of the metapixel (i.e., 75% in the classification solution) and is denoted as RoI2, and a remaining region is used for light propagation. The loss function is defined as:

$$Loss_{\text{depth}}(\boldsymbol{O}, \boldsymbol{O}^{gt}) = \frac{1}{N_{\text{RoI2}}^2} \sum_{i,j}^{(i,j) \in \text{RoI2}} \left( \boldsymbol{O}_{i,j}^{gt} - a|\boldsymbol{O}_{i,j}|^2 \right)^2 \qquad (4)$$

where, $a$ is a trainable parameter and is used to adjust a magnification of the light intensity, and $N_{\text{RoI2}}$ is a number of pixels in a row or column of the RoI2.

In order to limit light propagation with a metapixel region (denoted as RoI3), the loss function is defined as:

$$Loss_{\text{power}}(O) = -\log \frac{\sum_{i,j}^{(i,j)\in \text{RoI3}}|O_{i,j}|^2}{\sum|O_{i,j}|^2} \qquad (5)$$

A two-stage scheme is used, i.e., $O$ and structured light **SL** are constrainted simultaneously:

$$\boldsymbol{SL} = P_d\{\boldsymbol{t}_{\text{en}} \cdot \boldsymbol{I}\} \qquad (7)$$

where, $P_d$ is an operator for a free-space diffraction propagation distance d, $t_{\text{en}}$ is a transmission function of the encoding diffractive surface, and $\boldsymbol{I}$ is an incident light.

Therefore, a total loss function is:

$$Loss_2 = \lambda_1 Loss_{\text{depth}}(\boldsymbol{O}, \boldsymbol{O}^{gt}) + \lambda_2 Loss_{\text{power}}(\boldsymbol{O}) + \lambda_3 Loss_{\text{power}}(\boldsymbol{SL}) \qquad (10)$$

where $\lambda_1$, $\lambda_2$ and $\lambda_3$ are weights, and a sum of $\lambda_1$, $\lambda_2$ and $\lambda_3$ is 1. Therefore, in examples of the present disclosure, a superpixel optimization method is used when facing the three-dimensional perception for arbitrarily shaped objects in a general scene. The superpixel optimization method involves selecting a square region with a suitable size as a depth perceiving unit, training the phase modulation parameters of the encoding and decoding superpixels by the error back propagation algorithm to limit the propagation of the structured light generated by the encoding superpixel to the superpixel region, and to limit the output of the decoding superpixel to the superpixel region simultaneously, to prevent crosstalk between neighboring superpixels. Meanwhile, the decoding superpixel linearly maps the depth information to the light intensity of the ROI of the output plane via the intelligently optimized optical connection. After a single encoding superpixel and a single decoding superpixel are optimized, they are replicated at any integer multiple and spliced together to form the encoding intelligent diffractive surface and the decoding intelligent diffractive surface. In the examples of the present disclosure, the superpixel classification method is used when facing the three-dimensional perception for arbitrarily shaped objects under different illumination and reflectivity conditions. The target depth range is divided into a specific number of depth intervals. The trained superpixel maps the depth intervals to a number of predefined regions on the output plane. The region where the maximum light intensity is located is determined as the classification result and represents the quantization depth. Similarly, structured light propagation is constrained within each superpixel region. A single superpixel is replicated and spliced to form the encoding intelligent diffractive surface and the decoding intelligent diffractive surface. The global optimization method is used when facing a scenario with priori shape information. The global optimization method takes an entire diffractive surface as an optimization object, and trains the phase modulation parameters of the intelligent diffractive surface by the error back propagation algorithm, to optically map the depth information of the entire scenario to the light intensity of the output plane. In the present disclosure, the FoV can be increased by horizontally expanding the encoding and decoding diffractive surfaces, and the three-dimensional perception performance can also be enhanced by vertically stacking the number of diffractive surface layers.

In conclusion, in the present disclosure, the method is distinguished from the method using ToF or FMCW in the LiDAR solutions. The method works by encoding the depth information into the spatial pattern of the customized structured light and decoding it into the output light intensity by the optical interconnection optimized by diffractive surfaces. Different from the reconstruction algorithms, three-dimensional maps are immediately recorded using two-dimensional sensors, and the depth information is directly represented through the captured light intensity.

In the present disclosure, a customized superpixel model is developed, and is independently manipulates light propagation in each superpixel to achieve three-dimensional perception for arbitrary shaped objects. The encoding and decoding surfaces are co-optimized by deep learning, to achieve best three-dimensional perception performance. The diffractive surfaces are produced by simple three-dimensional printing or lithography, and are assembled into a three-dimensional imager. The present disclosure can be flexibly designed for different depth ranges. The encoding and decoding surfaces can be cascaded horizontally for larger FoV and can be stacked vertically for better performance. Based on this scalable architecture, the present disclosure has been successfully applied in a variety of scenarios, including high-resolution three-dimensional perception scenarios with priori knowledge, three-dimensional perception for arbitrarily shaped objects, robust three-dimensional perception under different illumination and reflection conditions, and all-optical obstacle avoidance in actual automatic driving tasks. In the present disclosure, by accomplishing three-dimensional perception using passive diffractive surfaces and consuming no energy other than optical power, the computational load are reduced and a light-speed and power-efficient solution is provided for depth perception. In the present disclosure, the device is able to work with a speed of 600 Hz (limited by a camera frame rate) and a power of 0.3 μW. Compared with typical 30 Hz and watt-level power in conventional methods, a 20 times improvement in speed and a 6 orders of magnitude improvement in energy efficiency are achieved in the present disclosure.

In conclusion, an all-optical neural network system for depth detection is established in the present disclosure, which exhibits excellent performance over electronic networks with the same amount of parameters (taking U-Net structure as an example). The method and device in the present disclosure works well at long distances (up to 6 meters), a low power (as low as $0.3\mu W$), a high speed (up to 600Hz), and a high transmittance, proving its performance advantages over traditional depth perception methods such as the LiDAR.

The method based on the all-optical intelligent computing three-dimensional perception system in the present disclosure enables light-speed and post-processing-free three-dimensional perception via diffractive surfaces. The present disclosure works by the encoding depth information into the spatial pattern of customized structured light and decoding it into the output light intensity through optical interconnections optimized by diffractive surfaces. Unlike the reconstruction algorithms, three-dimensional maps are immediately recorded using two-dimensional sensors, and the captured light intensity directly represents the depth information. The present disclosure proposes a new idea of three-dimensional perception, which greatly simplifies the three-dimensional perception process and supports the next generation of high-speed, low-power three-dimensional perception technology.

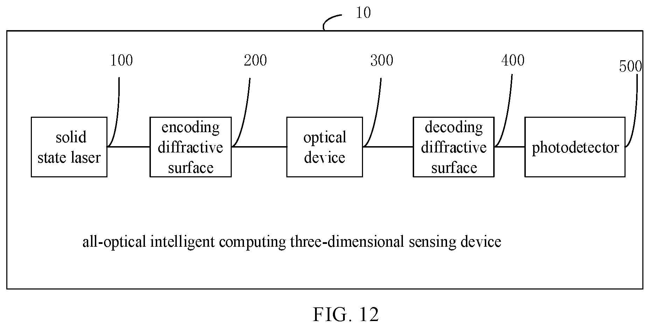

In order to realize the above embodiments, as illustrated in FIG. 12, the embodiment provides an all-optical intelligent computing three-dimensional perception device 10. The device includes: a solid state laser 100, an encoding diffractive surface 200, a plurality of optical elements 300, a decoding diffractive surface 400, and a photodetector 500.

The solid state laser 100 is configured to generate a laser beam.

The encoding diffractive surface 200 consists of a phase modulator based on encoding phase modulation information, is configured to modulate a wave-front phase based on the laser beam to generate a structured light with spatial pattern varying with depth.

The plurality of optical elements 300 are configured to irradiate the generated structured light onto a surface of an object.

The decoding diffractive surface 400 consists of a phase modulator based on decoding phase modulation information, is configured to map depth information in the structured light reflected by the object to a light intensity of an output plane.

The photodetector 500 is configured to obtain light intensity information on the output plane for depth information acquisition to achieve three-dimensional perception.

The intelligent diffractive surface consists of a phase modulator. The phase modulator can be realized by methods such as a SLM or a phase plate made of a specific material. The phase modulator can determine a light amplitude modulation coefficient and a light phase modulation coefficient of each pixel. Each pixel is an optical neuron. The intelligent diffractive surfaces can form a neural network with a specific function through free space propagation to realize tasks such as intelligent computation and feature learning.

With the all-optical intelligent computing three-dimensional perception device of the embodiment of the present disclosure, light-speed and post processing-free three-dimensional perception can be achieved through diffractive surfaces. The present disclosure works by encoding the depth information into the spatial pattern of the custom structured light and decoding it into the output light intensity through diffractive surface-optimized optical interconnections. Unlike the use of reconstruction algorithms, three-dimensional maps are immediately recorded using two-dimensional sensors, and the captured light intensity directly represents the depth information. The present disclosure provides a new idea for the three-dimensional perception, which greatly simplifies the three-dimensional perception process and supports the next generation of high-speed, low-power three-dimensional perception technology.

In the present disclosure, the reference terms "an embodiment", "some embodiments", "example", "specific example", and "some examples" and the like are intended to describe specific features, structures, materials, or characteristics described in combination with the embodiments or examples are included in at least one embodiment or example of the present disclosure. In the present disclosure, the schematic expressions of the above terms do not have to be directed to the same embodiments or examples. Moreover, the specific features, structures, materials, or characteristics described may be combined in a suitable manner in any one or more embodiments or examples. In addition, without contradicting each other, those skilled in the art may combine different embodiments or examples described in this present disclosure and features of different embodiments or examples.

In addition, terms such as "first" and "second" are used herein for purposes of description and are not intended to indicate or imply relative importance or to imply the number of technical features indicated. The feature defined with "first" or "second" may explicitly or implicitly include at least one of these features. In the description of the present disclosure, "a plurality of" means at least two, for example, two or three, unless specified otherwise.

**Claims**

1.  An all-optical intelligent computing three-dimensional perception system, comprising: a reference light inputting module (111), an all-optical structured light encoding module (112), a structured light illuminating module (113), an all-optical reflected light decoding module (114) and a three-dimensional information acquisition module (115), wherein,

the reference light inputting module (111) comprises a solid state laser with a working wavelength, and the solid state laser is configured to generate a laser beam;

the all-optical structured light encoding module (112) comprises an encoding diffractive surface consists of a phase modulator based on encoding phase modulation information, and the encoding diffractive surface is configured to modulate a wave-front phase based on the laser beam to generate a structured light with a spatial pattern varying with depth;

the structured light illuminating module (113) comprises a plurality of optical elements, and the optical elements are configured to irradiate the generated structured light onto a surface of an object;

the all-optical reflected light decoding module (114) comprises a decoding diffractive surface consists of a phase modulator based on decoding phase modulation information, and the decoding diffractive surface is configured to map depth information in the structured light reflected by the object to a light intensity of an output plane; and

the three-dimensional information acquisition module (115) is configured to obtain light intensity information on the output plane by using a photodetector for a depth information acquisition to achieve a three-dimensional perception.

2. The system of claim 1, wherein the phase modulator comprises a spatial light modulator, the phase modulator is configured to determine an amplitude modulation coefficient and a phase modulation coefficient of each pixel for the structured light, and each pixel is an optical neuron.

3. The system of claim 1 or 2, wherein the encoding diffractive surface or decoding diffractive surface forms a neural network with a specific function through free space propagation.

4. An optical superpixel modeling and training method for three-dimensional perception for arbitrarily shaped objects, applied to the system of any one of claims 1-3, comprising:

constructing (S1) first training data based on a preset first superpixel optimized region;

training (S2) first neuron data in an encoding diffractive surface and a decoding diffractive surface of a superpixel using the first training data, to determine first target depth information according to depth information in a spatial pattern of a structured light of an encoding superpixel and a reflected optical pattern of the structured light of a decoding superpixel; and

mapping (S3) the first target depth information to a light intensity of a region of interest of an output plane by an intelligent optimized optical connection.

5. The method of claim 4, further comprising:

optimizing the encoding superpixel and the decoding superpixel, to constrain propagation of the structured light within a superpixel region to obtain a structured light constraint result; and

replicating and splicing an optimized encoding superpixel and decoding superpixel based on the structured light constraint result to obtain a corresponding encoding diffractive surface and a decoding intelligent diffractive surface.

6. The method of claim 4 or 5, wherein the first training data comprises a training set, a test set, and a loss function, and the first neuron data comprises an amplitude modulation coefficient and a phase modulation coefficient of neuron.

7. A superpixel classification modeling and training method for a robust three-dimensional perception for an arbitrarily shaped object under different illumination and reflectivity conditions, applied to the system of any one of claims 1-3, comprising:

constructing (S101) second training data based on a preset second superpixel optimized region;

training (S102) second neuron data in an encoding diffractive surface and a decoding diffractive surface of a superpixel using the second training data, to determine second target depth information according to depth information in a spatial pattern of a structured light of an encoding superpixel and a reflected optical pattern of the structured light of a decoding superpixel; and

classifying (S103) the second target depth information into a first preset number of depth intervals, and mapping the first preset number of depth intervals to a second preset number of preset regions on an output plane, to determine a region where a maximum light intensity is located as a classification result.

8. The method of claim 7, wherein the second training data comprises a training set, a test set, and a loss function, and the second neuron data comprises an amplitude modulation coefficient and a phase modulation coefficient of neuron.

9. An optical global modeling and training method for an object with priori shape information, applied to the system of any one of claims 1-3, comprising:

constructing (S10) third training data based on an optimized region with a global size;
training (S20) third neuron data in an encoding diffractive surface and a decoding diffractive surface of a superpixel using the third training data, to form the encoding diffractive surface and the decoding diffractive surface according to depth information in a spatial pattern of a structured light of an encoding superpixel and a reflected optical pattern of the structured light of a decoding superpixel; and
retrieving (S30) a region depth according to a preset demand based on a light intensity of an output region of the encoding diffractive surface and the decoding diffractive surface.

10. The method of claim 9, wherein the third training data comprises a training set, a test set, and a loss function, and the third neuron data comprises an amplitude modulation coefficient and a phase modulation coefficient of neuron.

**Patentansprüche**

1. Rein optisches intelligentes dreidimensionales Rechen-Wahrnehmungssystem, umfassend: ein Referenzlichteingabemodul (111), ein rein optisches strukturiertes Lichtcodiermodul (112), ein strukturiertes Lichtbeleuchtungsmodul (113), ein rein optisches reflektiertes Lichtdecodiermodul (114) und ein dreidimensionales Informationserfassungsmodul (115), worin,

das Referenzlichteingabemodul (111) einen Festkörperlaser mit einer Arbeitswellenlänge umfasst, und der Festkörperlaser konfiguriert ist, einen Laserstrahl zu erzeugen;
das rein optische strukturierte Lichtcodiermodul (112) eine codierende diffraktive Fläche umfasst, bestehend aus einem Phasenmodulator basierend auf codierenden Phasenmodulationsinformationen, und die codierende diffraktive Fläche konfiguriert ist, eine Wellenfrontphase aufgrund des Laserstrahls zu modulieren, um ein strukturiertes Licht mit einem räumlichen Muster zu erzeugen, das sich mit der Tiefe ändert;
das strukturierte Lichtbeleuchtungsmodul (113) eine Vielzahl von optischen Elementen umfasst, und die optischen Elemente konfiguriert sind, das erzeugte strukturierte Licht auf eine Fläche eines Objektes zu strahlen;
das rein optische reflektierte Lichtdecodiermodul (114) eine decodierende diffraktive Fläche umfasst, bestehend aus einem Phasenmodulator basierend auf decodierenden Phasenmodulationsinformationen, und die decodierende diffraktive Fläche konfiguriert ist, Tiefeninformationen in dem strukturierten Licht, das vom Objekt reflektiert wird, zu einer Lichtintensität einer Ausgabeebene zu mappen; und
das dreidimensionale Informationserfassungsmodul (115) konfiguriert ist, Lichtintensitätsinformationen über die Ausgabeebene durch Verwendung eines Fotodetektors für eine Tiefeninformationserfassung zu erhalten, um eine dreidimensionale Wahrnehmung zu erzielen.

2. System nach Anspruch 1, worin der Phasenmodulator einen räumlichen Lichtmodulator umfasst, der Phasenmodulator konfiguriert ist, einen Amplitudenmodulationskoeffizienten und einen Phasenmodulationskoeffizienten jedes Pixels für das strukturierte Licht zu bestimmen, und jedes Pixel ein optisches Neuron ist.

3. System nach Anspruch 1 oder 2, worin die codierende diffraktive Fläche oder die decodierende diffraktive Fläche ein neuronales Netzwerk mit einer spezifischen Funktion durch Freiraumausbreitung bildet.

4. Optisches Superpixelmodellier- und Trainingsverfahren für dreidimensionale Wahrnehmung für willkürlich geformte Objekte, das auf das System nach einem der Ansprüche 1-3 angewandt wird, umfassend:

Konstruieren (S1) von ersten Trainingsdaten aufgrund eines vorgegebenen ersten optimierten Superpixelbereichs;
Trainieren (S2) von ersten Neurondaten in einer codierenden diffraktiven Fläche und einer decodierenden diffraktiven Fläche eines Superpixels durch Verwendung der ersten Trainingsdaten, um erste Zieltiefeninformationen gemäß Tiefeninformationen in einem räumlichen Muster eines strukturierten Lichtes eines codierenden Superpixels und einem reflektierten optischen Muster des strukturierten Lichtes eines decodierenden Superpixels zu bestimmen; und

Mappen (S3) der ersten Zieltiefeninformationen zu einer Lichtintensität eines interessierenden Bereichs einer Ausgabeebene durch eine intelligente optimierte optische Verbindung.

**5.** Verfahren nach Anspruch 4, ferner umfassend:

Optimieren des codierenden Superpixels und des decodierenden Superpixels, um die Ausbreitung des strukturierten Lichtes innerhalb eines Superpixelbereichs zu begrenzen, um ein strukturiertes Lichtbegrenzungsergebnis zu erhalten; und
Replizieren und Spleißen eines optimierten codierenden Superpixels und decodierenden Superpixels aufgrund des strukturierten Lichtbegrenzungsergebnisses, um eine entsprechende codierende diffraktive Fläche und eine decodierende intelligente diffraktive Fläche zu erhalten.

**6.** Verfahren nach Anspruch 4 oder 5, worin die ersten Trainingsdaten einen Trainingssatz, einen Testsatz und eine Verlustfunktion umfassen, und die ersten Neurondaten einen Amplitudenmodulationskoeffizienten und einen Phasenmodulationskoeffizienten von Neuron umfassen.

**7.** Superpixelklassifikationsmodellier- und Trainingsverfahren für eine robuste dreidimensionale Wahrnehmung für einen willkürlich geformten Objekt unter verschiedenen Beleuchtungs- und Reflektivitätsbedingungen, das auf das System nach einem der Ansprüche 1-3 angewandt wird, umfassend:

Konstruieren (S101) von zweiten Trainingsdaten aufgrund eines vorgegebenen zweiten optimierten Superpixelbereichs;
Trainieren (S102) von zweiten Neurondaten in einer codierenden diffraktiven Fläche und einer decodierenden diffraktiven Fläche eines Superpixels durch Verwendung der zweiten Trainingsdaten, um zweite Zieltiefeninformationen gemäß Tiefeninformationen in einem räumlichen Muster eines strukturierten Lichtes eines codierenden Superpixels und einem reflektierten optischen Muster des strukturierten Lichtes eines decodierenden Superpixels zu bestimmen; und
Klassifizieren (S103) der zweiten Zieltiefeninformationen in eine erste vorgegebene Anzahl von Tiefenintervallen, und Mappen der ersten vorgegebenen Anzahl von Tiefenintervallen zu einer zweiten vorgegebenen Anzahl von vorgegebenen Bereichen an einer Ausgabeebene, um einen Bereich zu bestimmen, wo eine maximale Lichtintensität als ein Klassifikationsergebnis loziert ist.

**8.** Verfahren nach Anspruch 7, worin die zweiten Trainingsdaten einen Trainingssatz, einen Testsatz und eine Verlustfunktion umfassen, und die zweiten Neurondaten einen Amplitudenmodulationskoeffizienten und einen Phasenmodulationskoeffizienten von Neuron umfassen.

**9.** Optisches globales Modellier- und Trainingsverfahren für einen Objekt mit A-priori-Forminformationen, das auf das System nach einem der Ansprüche 1-3 angewandt wird, umfassend:

Konstruieren (S10) von dritten Trainingsdaten aufgrund eines optimierten Bereichs mit einer globalen Größe;
Trainieren (S20) von dritten Neurondaten in einer codierenden diffraktiven Fläche und einer decodierenden diffraktiven Fläche eines Superpixels durch Verwendung der dritten Trainingsdaten, um die codierende diffraktive Fläche und die decodierende diffraktive Fläche gemäß Tiefeninformationen in einem räumlichen Muster eines strukturierten Lichtes eines codierenden Superpixels und einem reflektierten optischen Muster des strukturierten Lichtes eines decodierenden Superpixels zu bilden; und
Wiedergewinnen (S30) einer Bereichstiefe gemäß einer vorgegebenen Anforderung basierend auf einer Lichtintensität eines Ausgabebereiches der codierenden diffraktiven Fläche und der decodierenden diffraktiven Fläche.

**10.** Verfahren nach Anspruch 9, worin die dritten Trainingsdaten einen Trainingssatz, einen Testsatz und eine Verlustfunktion umfassen, und die dritten Neurondaten einen Amplitudenmodulationskoeffizienten und einen Phasenmodulationskoeffizienten von Neuron umfassen.

**Revendications**

**1.** Système de perception tridimensionnelle informatique intelligente entièrement optique, comprenant : un module d'entrée de lumière de référence (111), un module de codage de lumière structurée entièrement optique (112), un module d'éclairage à lumière structurée (113), un module de décodage de lumière réfléchie entièrement optique (114) et un module d'acquisition d'informations tridimensionnelles (115), dans lequel,

le module d'entrée de lumière de référence (111) comprend un laser à semiconducteurs avec une longueur d'onde de travail, et le laser à semiconducteurs est configuré pour générer un faisceau laser ;

le module de codage de lumière structurée entièrement optique (112) comprend une surface de diffraction de codage consistant en un modulateur de phase basé sur des informations de modulation de phase de codage, et la surface de diffraction de codage est configurée pour moduler une phase de front d'onde en fonction du faisceau laser pour générer une lumière structurée avec un motif spatial variant selon la profondeur ;

le module d'éclairage à lumière structurée (113) comprend une pluralité d'éléments optiques, et les éléments optiques sont configurés pour émettre la lumière structurée générée sur une surface d'un objet ;

le module de décodage de lumière réfléchie entièrement optique (114) comprend une surface de diffraction de décodage consistant en un modulateur de phase basé sur des informations de modulation de phase de décodage, et la surface de diffraction de décodage est configurée pour mettre en correspondance des informations de profondeur dans la lumière structurée réfléchie par l'objet avec une intensité lumineuse d'un plan de sortie ; et

le module d'acquisition d'informations tridimensionnelles (115) est configuré pour obtenir des informations d'intensité lumineuse sur le plan de sortie en utilisant un photodétecteur pour une acquisition d'informations de profondeur afin de parvenir à une perception tridimensionnelle.

2. Système selon la revendication 1, dans lequel le modulateur de phase comprend un modulateur spatial de lumière, le modulateur de phase est configuré pour déterminer un coefficient de modulation d'amplitude et un coefficient de modulation de phase de chaque pixel pour la lumière structurée, et chaque pixel est un neurone optique.

3. Système selon la revendication 1 ou 2, dans lequel la surface de diffraction de codage ou la surface de diffraction de décodage forme un réseau neuronal avec une fonction spécifique par propagation en espace libre.

4. Procédé de modélisation et de formation de superpixel optique pour la perception tridimensionnelle d'objets de forme arbitraire, appliqué au système selon l'une quelconque des revendications 1-3, comprenant :

la construction (S1) des premières données de formation sur la base d'une première région optimisée de superpixel prédéfinie ;

la formation (S2) de premières données de neurone dans une surface de diffraction de codage et une surface de diffraction de décodage d'un superpixel à l'aide des premières données de formation, pour déterminer des premières informations de profondeur cible selon des informations de profondeur dans un motif spatial d'une lumière structurée d'un superpixel de codage et un motif optique réfléchi de la lumière structurée d'un superpixel de décodage ; et

la mise en correspondance (S3) des premières informations de profondeur cible avec une intensité lumineuse d'une région d'intérêt d'un plan de sortie par une connexion optique optimisée intelligente.

5. Procédé selon la revendication 4, comprenant en outre :

l'optimisation du superpixel de codage et du superpixel de décodage, pour limiter la propagation de la lumière structurée dans une région de superpixel afin d'obtenir un résultat de limite de lumière structurée ; et

la réplication et l'épissage d'un superpixel de codage optimisé et le décodage du superpixel sur la base du résultat de limite de lumière structurée pour obtenir une surface de diffraction de codage correspondante et une surface de diffraction intelligente de décodage.

6. Procédé selon la revendication 4 ou 5, dans lequel les premières données de formation comprennent un ensemble de formation, un ensemble de test et une fonction de perte, et les premières données de neurone comprennent un coefficient de modulation d'amplitude et un coefficient de modulation de phase de neurone.

7. Procédé de modélisation et de formation de classification de superpixel pour une perception tridimensionnelle robuste pour un objet de forme arbitraire dans différentes conditions d'éclairage et de réflectivité, appliqué au système selon l'une quelconque des revendications 1-3, comprenant :

la construction (S101) de deuxièmes données de formation basées sur une seconde région optimisée de superpixel prédéfinie ;

la formation (S102) de deuxièmes données de neurone dans une surface de diffraction de codage et une surface de diffraction de décodage d'un superpixel en utilisant les deuxièmes données de formation, pour déterminer des secondes informations de profondeur cible selon des informations de profondeur dans un motif spatial d'une lumière structurée d'un superpixel de codage et un motif optique réfléchi de la lumière structurée d'un superpixel de décodage ; et

le classement (S103) des secondes informations de profondeur cible en un premier nombre prédéfini d'intervalles de profondeur, et la mise en correspondance du premier nombre prédéfini d'intervalles de profondeur avec un second nombre prédéfini de régions prédéfinies sur un plan de sortie, pour déterminer une région où est située une intensité lumineuse maximale en tant que résultat de classification.

8. Procédé selon la revendication 7, dans lequel les deuxièmes données de formation comprennent un ensemble de formation, un ensemble de test et une fonction de perte, et les deuxièmes données de neurone comprennent un coefficient de modulation d'amplitude et un coefficient de modulation de phase de neurone.

9. Procédé de modélisation et de formation global optique pour un objet avec des informations de forme à priori, appliqué au système selon l'une quelconque des revendications 1-3, comprenant :

la construction (S10) de troisièmes données de formation basées sur une région optimisée de taille globale ;
la formation (S20) de troisièmes données de neurone dans une surface de diffraction de codage et une surface de diffraction de décodage d'un superpixel à l'aide des troisièmes données de formation, pour former la surface de diffraction de codage et la surface de diffraction de décodage selon des informations de profondeur dans un motif spatial d'une lumière structurée d'un superpixel de codage et un motif optique réfléchi de la lumière structurée d'un superpixel de décodage ; et
l'extraction (S30) d'une profondeur de région en fonction d'une demande prédéfinie basée sur une intensité lumineuse d'une région de sortie de la surface de diffraction de codage et de la surface de diffraction de décodage.

10. Procédé selon la revendication 9, dans lequel les troisièmes données de formation comprennent un ensemble de formation, un ensemble de test et une fonction de perte, et les troisièmes données de neurone comprennent un coefficient de modulation d'amplitude et un coefficient de modulation de phase de neurone.

FIG. 1

FIG. 2

constructing first training data based on a preset first superpixel optimized region — S1

training first neuron data in an encoding diffractive surface and a decoding diffractive surface of a superpixel using the first training data, to encode depth information in a spatial pattern of a structured light of the superpixel and to decode a reflected optical pattern of the structured light of the superpixel, so as to determine first target depth information — S2

mapping the first target depth information to a light intensity of a region of interest of an output plane by an intelligent optimized optical connection — S3

FIG. 3

constructing second training data based on a preset second superpixel optimized region — S101

training second neuron data on an encoding diffractive surface and a decoding diffractive surface of a superpixel using the second training data, to encode depth information in a spatial pattern of a structured light of the superpixel and to decode a reflected optical pattern of the structured light of the superpixel, so as to determine second target depth information — S102

classifying the second target depth information into a first preset number of depth intervals, mapping the first preset number of depth intervals to a second preset number of preset regions on an output plane, and determining a region where a maximum light intensity is located as a classification result — S103

FIG. 4

constructing third training data based on an optimized region with a global size — S10

training third neuron data in an encoding diffractive surface and a decoding diffractive surface of a superpixel using the third training data, to encode depth information in a spatial pattern of a structured light of the superpixel and to decode a reflected optical pattern of the structured light of the superpixel, to form the encoding diffractive surface and the decoding diffractive surface — S20

retrieving a region depth according to a preset demand based on a light intensity of an output region of the encoding diffractive surface and the decoding diffractive surface — S30

FIG. 5

FIG. 6

FIG. 7

FIG. 8

FIG. 9

FIG. 10

FIG. 11

10

| 100 | 200 | 300 | 400 | 500 |

| solid state laser | encoding diffractive surface | optical device | decoding diffractive surface | photodetector |

all-optical intelligent computing three-dimensional sensing device

FIG. 12

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022366253 A1